# EUROPEAN PATENT SPECIFICATION

(11) **EP 1 029 438 B1**
(45) Date of publication and mention of the grant of the patent: **17.12.2003**
(21) Application number: 00200450.5
(22) Date of filing: 11.02.2000
(51) Int. Cl.: A01D 45/00, A01G 31/06

(54) **Method and apparatus for harvesting chicory**
Verfahren und Vorrichtung zur Ernte von Chicoree
Méthode et dispositif pour récolter les endives

(30) Priority: 17.02.1999 NL 1011323
(43) Date of publication of application: 23.08.2000
(73) Proprietor: Stichting Robolof, 1696 AM Oosterblokker (NL)
(72) Inventor: Miedema, Willibrordus Jaring, 1778 KN Westerland (NL)
(74) Representative: Metman, Karel Johannes

(56) References cited:
- EP-A- 0 858 735
- FR-A- 2 618 043
- US-A- 4 879 840

## Description

The present invention relates to a method of harvesting chicory, of which the roots having tops formed thereon are accommodated in holders in forcing trays, wherein a cutting member and the holders are guided relative to each other and the tops, which are placed side by side, are then cut off from the roots.

A method of this kind is known from the present applicant's European patent application No. 0 858 735. The object of the present invention is to provide a method which is particularly advantageous for harvesting chicory cultivated in forcing trays.

In order to accomplish that objective, the method according to the invention is characterized in that the holders containing at least one row of chicory roots are lifted from the forcing tray and placed at an angle to the horizontal, after which the cutting member and the holder are moved relative to each other and the chicory tops fall and are received.

When this method is used, the chicory tops are automatically collected for further processing after being cut off, whereby the chicory roots need not be removed from the holders. It is advantageous thereby if the chicory tops are directly received on a conveyor, which subsequently discharges the chicory tops.

In an efficient embodiment of the method according to the invention, all chicory tops are lifted from the forcing tray at the same time by means of their holders, and the cutting machine is moved forwards and backwards, whilst a respective new row of chicory tops is placed in front of the cutting member by means of the holders.

In order to ensure that the chicory tops are cut off from the roots at the correct height, a separating member is disposed near the transition from the chicory roots to the chicory tops, which separating member is used as a guide for the cutting member during harvesting.

The invention furthermore relates to an apparatus for harvesting chicory, of which the roots having tops formed thereon are accommodated in holders in a forcing tray, which apparatus according to the invention is characterized by positioning means for positioning the holders at an angle, a cutting member, means for moving the positioning machine and the cutting machine relative to each other, and reception means for receiving the cut-off tops.

It is advantageous thereby if the positioning means include a tiltable, preferably border-like frame fitted with at least one drivable gripper being movable in the longitudinal direction of the frame for gripping and moving the holders relative to the frame.

In this manner, respective rows of chicory roots can be placed in front of the cutting member, which subsequently cuts off the entire row of chicory tops, and in an embodiment wherein the reception means are in the form of an endless conveyor belt the cut-off chicory tops can be directly discharged for further processing.

The invention will now be explained in more detail with reference to the drawings, which show an exemplary embodiment of the invention.

Fig. 1 is a side view of the exemplary embodiment of the apparatus for harvesting chicory according to the invention.

Fig. 2 is a top plan view of the apparatus of Fig. 1, wherein the positioning means are shown in a horizontal position, however.

Fig. 3 is a front view of the apparatus of Fig. 2.

Fig. 4 is a larger-scale detail IV of Fig. 1.

The apparatus for harvesting chicory which is shown in the drawing has in particular, but not exclusively so, been designed for cooperation with the chicory forcing tray according to European patent application No. 0 858 735.

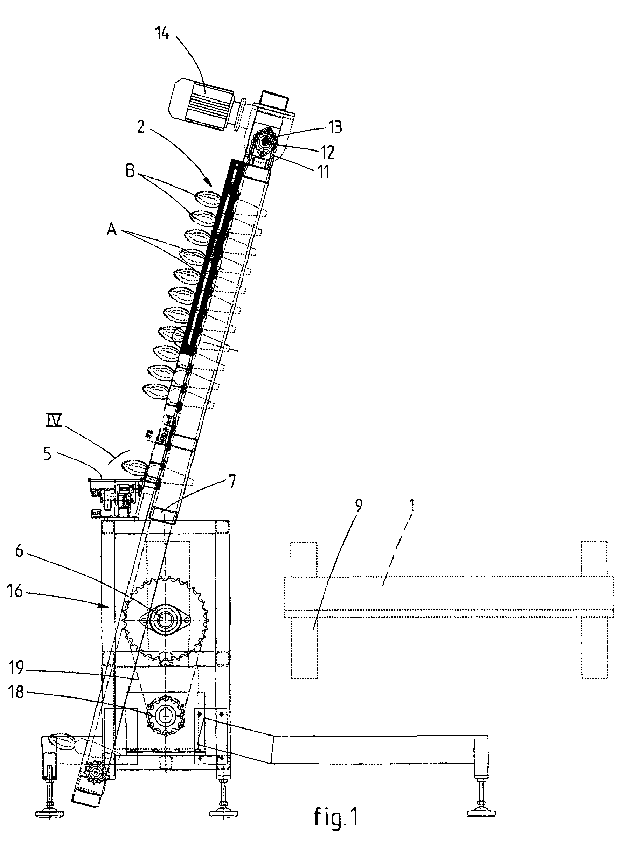

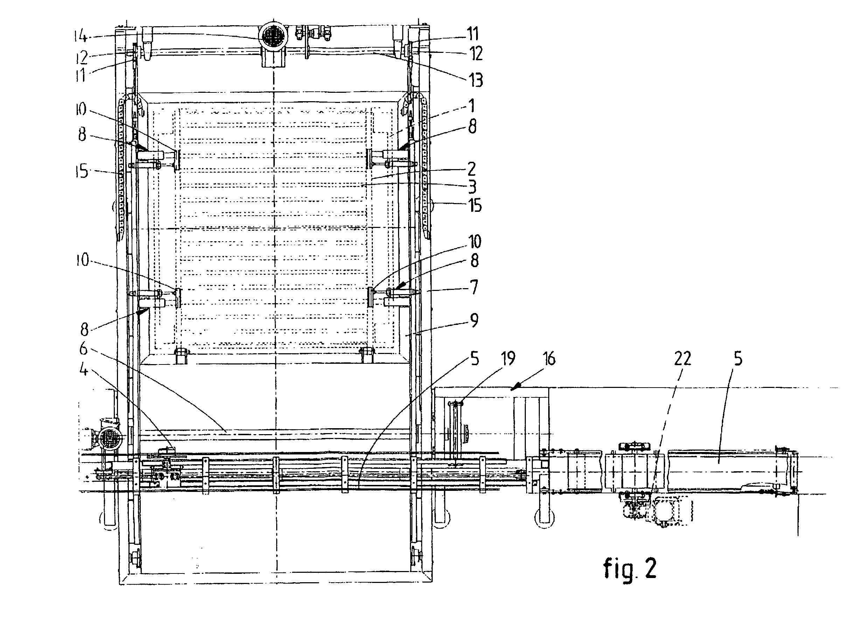

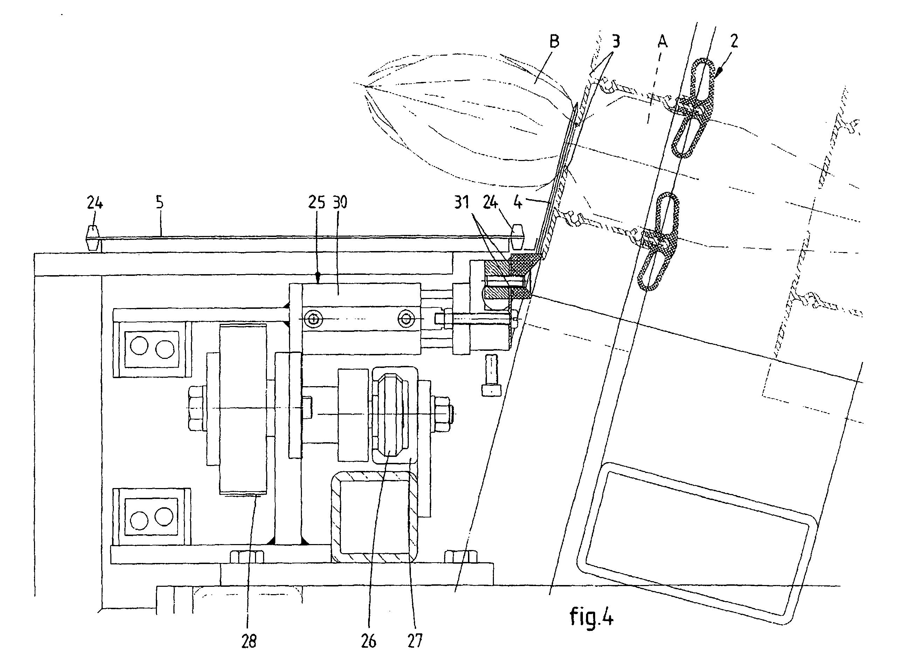

In Fig. 2 this forcing tray 1 containing holders 2 formed integrally with each another is indicated in dotted lines. Figs. 1 and 4 show the manner in which chicory roots A are positioned in said holders 2 and are placed with their upper sides in abutment with separating members 3 in the form of horizontal flanges so as to be more or less separated from the associated chicory tops B, which project above the separating members 3. Separating members 3 can be used as a reference plane for a cutting member 4, so that the chicory tops B will be cut off from the roots A at the correct height. In this manner the chicory can be harvested without there being a need to remove the chicory from the holders 2.

As is shown in Fig. 1, the chicory tops B are cut off whilst holders 2 are inclined at an angle, an angle of 75° in the illustrated embodiment, so that the chicory tops B can easily be received by reception means, in this case in the form of an endless conveyor belt 5 yet to be described in more detail, after being cut off.

The apparatus is fitted with positioning means for positioning the holders 2, which positioning means are in this embodiment provided with a border-like frame 7 which is capable of tilting movement about a tilting axis 6, as well as with grippers 8 which are movable in the longitudinal direction of the frame 7. The holders 2 containing the chicory roots A can be lifted from the forcing tray by means of said grippers, whereby the forcing tray 1 is left on a supporting frame 9 or on a conveyor by means of which the forcing tray has been supplied. The grippers 8, two sets of opposing grippers in this embodiment, have inwardly and outwardly moving jaws 10, and they are capable of being moved in frame 7 by means of driving chains 11 disposed on both longitudinal sides of the frame 7, which driving chains are driven by chain wheels 12. Said chain wheels are mounted on a driving shaft 13, and driving shaft 13 can be rotated by an electric motor 14 for moving the grippers 8 in frame 7, and consequently for moving holders 2 containing the chicory relative to the cutting member 4. As a result of this movement, a respective new row of chicory tops can be positioned in front of the cutting member. The jaws 10 of grippers 8 can be adjusted by electrical or pneumatic means or the like, and they are fitted with a flexible connecting line 15.

As is furthermore shown in Figs. 1 - 3, a stationary frame 16 of the apparatus, with respect to which frame 7 can tilt, is fitted with a shaft 18 to be driven by a motor 17, which is in driving connection with the tilting axis 6 of tilting frame 7 via a chain transmission 19.

As already mentioned above, cut-off chicory tops B are received on an endless conveyor belt 5, which is guided over stationary frame 16 in a direction transversely to tilting frame 7, and which comprises a conveying portion and a return portion. The return portion is fitted with a cleaning brush 20, a tensioning loop 21 with a driving unit 22, and a return portion 23, which extends entirely under stationary frame 16 so as not to form an impediment to tilting frame 7. As is shown more clearly in Fig. 4, the endless conveyor belt 5 is provided with longitudinal ribs 24 on its side edges, which ensure that chicory tops B falling onto the conveyor belt 5 will not fall sideways off the conveyor belt 5.

Fig. 4 shows the construction of the cutting member 4 and the parts that cooperate therewith in more detail. The cutting member is supported on a supporting bogie 25 which is capable of movement under the transport portion of the conveyor belt 5, which bogie runs in a horizontal guide rail with wheels 26 and which can be moved forwards and backwards by means of a driving belt driven by electric motor 29. Cutting member 4 in the form of a knife having a sloping cutting face, which knife is inclined at the same angle as tilting frame 7 in the operative position, can be slightly biassed in the direction of tilting frame 7 by means of a controllable spring member 30, in such a manner that a guide member 31 is held in engagement with the flange of one of the separating members 3 of holders 2. This enables the cutting member 3 to follow the path of separating member 3, and thus the tops B will be cut off at the same distance from the separating member 3 at all times, also when one separating member 3 is bent, for example. The distance between cutting member 4 and separating member 3 is accurately adjustable.

The operation of the above-described apparatus as illustrated in the drawing is as follows.

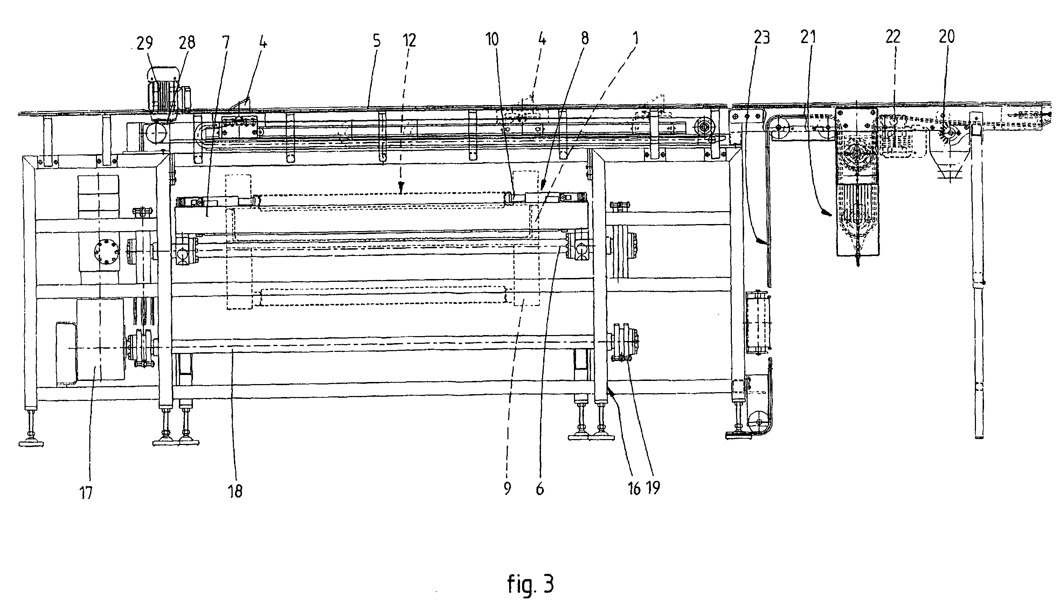

When a forcing tray 1 is present in supporting frame 9, the grippers 8 of the tilting frame 7 are brought into engagement with the edges of holders 2, so that the holders 2 can be lifted from forcing tray 1 as one unit upon subsequent tilting of the frame 7, into a position in which the holders extend at an angle to the horizontal, an angle of about 75° in this embodiment. The tilting axis of frame 7 is positioned so that the holders 2 can be disposed close to the conveyor belt 5 at the desired angle, so that the tops B will automatically fall onto the conveyor belt 5 after being cut off. Once the holders 2 have been correctly positioned with respect to the tilting frame 7 by means of grippers 8, that is, a row of chicory tops crosses the path of the cutting member 4, the spring member 30 can be actuated, as a result of which the guide member 31 is brought into engagement with one of the flanges of the separating member 3 of the holders. Following that, the drive unit of the cutting member can be activated, as a result of which the bogie 25 will be moved from the right to the left in Fig. 3 by means of the driving belt 28, and the tops B can be separated from their roots A, so that they will automatically fall onto conveyor belt 5, which has been set going in the meantime.

Once a whole row of tops B has been cut off, the cutting member 4 is returned to its starting position by means of bogey 25 and the grippers 8 are moved in the tilting frame 7, in such a manner that a next row of chicory tops B is positioned in front of the cutting member 4. Once the cutting member has returned to its starting position and the next row of chicory tops B has been moved to the cutting position, the process will be repeated and a more or less continuous flow of cut-off chicory tops B can be supplied in this manner.

Since it takes some time to exchange a forcing tray with holders 2 for a new forcing tray 1 after all the chicory tops B that are present in said forcing tray have been cut off, it is advantageous to use twin positioning means for the holders 2 and the cutting member 4, and a single conveyor 5, so that one cutting member 4 can operate while the forcing tray 1 present at the other cutting member 4 is being exchanged. It is also possible to have a single cutting member 4 operate more quickly, of course, thus building up a buffer stock which can be used for further processing during the time that a forcing tray 1 is being exchanged.

From the foregoing it will be apparent that the invention provides a method and apparatus for harvesting chicory which is remarkable for its automatic and reliable operation, wherein it is ensured in an efficient manner that a nicely cut chicory top is obtained. This saves time in the further (manual) processing of the chicory tops.

The invention is not restricted to the above-described embodiment as shown in the drawing, which can be varied in several ways without departing from the scope of the invention. Thus it is also possible to supply the chicory without a forcing tray, and the holders can be positioned differently during cutting. Furthermore, the cutting member may be constructed entirely differently, whilst it is conceivable that the chicory tops are moved relative to a stationary cutting member in order to be cut off.

## Claims

1. A method of harvesting chicory, of which the roots (A) having tops (B) formed thereon are accommodated in holders (2) in a forcing tray (1), wherein a cutting member (4) and the holders are guided relative to each other and the tops, which are placed side by side, are then cut off from the roots, **characterized in that** the holders (2) containing at least one row of chicory roots (A) are lifted from the forcing tray (1) and placed at an angle to the horizontal, after which the cutting member and the holder (2) are moved relative to each other and the chicory tops (B) fall and are received.

2. A method according to claim 1, wherein the chicory tops (B) are received on a conveyor (5), which subsequently discharges the chicory tops.

3. A method according to claim 1 or 2, wherein all chicory tops (B) are lifted from the forcing tray (1) at the same time by means of their holders (2) and the cutting member (4) is moved forwards and backwards, whilst a respective new row of chicory tops (B) is placed in front of the cutting member by means of the holders (2).

4. A method according to any one of the preceding claims, wherein a separating member (3) is disposed near the transition from the chicory roots (A) to the chicory tops (B), which separating member is used as a guide for the cutting member (4) during harvesting, wherein the cutting member is preferably guided at a constant distance from the separating member under the influence of spring pressure and a guide member.

5. Apparatus for harvesting chicory, of which the roots (A) having tops (B) formed thereon are accommodated in holders (2) in a forcing tray (1), **characterized by** positioning means (6 - 15) for positioning the holders (2) at an angle to the horizontal, a cutting member (4), means (25 - 29) for moving the positioning means (7) and the cutting member (4) relative to each other, and reception means (5) for receiving the cut-off tops (B).

6. Apparatus according to claim 5, wherein said reception means (5) are in the form of a conveyor.

7. Apparatus according to claim 6, wherein said conveyor (5) comprises an endless conveyor belt.

8. Apparatus according to any one of the claims 5 - 7, wherein said positioning means (6 - 15) include a tiltable, preferably border-like frame (7) fitted with at least one drivable gripper (8) being movable in the longitudinal direction of the frame for gripping and moving the holders (2) relative to the frame (7).

9. Apparatus according to any one of the claims 5 - 8 for use with holders (2) comprising a separating member (3) disposed near the transition from the chicory roots (A) to the chicory tops (B), which separating member (3) can be used as a guide for the cutting member (4) during harvesting, wherein the cutting member (4), preferably a knife, is spring-supported by a bogie which is movable transversely to the frame (7) of said positioning means (6 - 15), and wherein the cutting member (4) includes a guide member (31) for engaging the separating member (3) of the holders (2) for the purpose of guiding the cutting member at a constant height with respect to the separating member.

10. Apparatus according to any one of the claims 5 - 9, comprising at least two sets of positioning means (6 - 15) and associated cutting members (4) disposed along an endless conveyor (5) for receiving the cut-off chicory tops (B) .

## Patentansprüche

1. Verfahren zur Ernte von Chicorées, deren Wurzeln (A) mit den daran gebildeten Köpfen (B) in Haltern (2) in einem Gewächstrog (1) aufgenommen sind, wobei ein Schneidelement (4) und die Halter relativ zueinander geführt werden, und die Köpfe, die seitlich nebeneinander angeordnet sind, dann von den Wurzeln abgeschnitten werden, **dadurch gekennzeichnet, daß** die Halter (2), die mindestens eine Reihe Chicoréewurzeln (A) enthalten, von dem Gewächstrog (1) hochgehoben werden und in einem Winkel zur Horizontalen angeordnet werden, woraufhin das Schneidelement und der Halter (2) relativ zueinander bewegt werden und die Chicoréeköpfe (B) herabfallen und aufgenommen werden.

2. Verfahren nach Anspruch 1, wobei die Chicoréeköpfe (B) auf einem Förderer (5) aufgenommen werden, der die Chicoréeköpfe anschließend ablädt.

3. Verfahren nach Anspruch 1 oder 2, wobei alle Chicoréeköpfe (B) mit Hilfe ihrer Halter (2) gleichzeitig aus dem Gewächstrog (1) gehoben werden und das Schneidelement (4) vorund zurückbewegt wird, während jeweils eine neue Reihe Chicoréeköpfe (B) mittels der Halter (2) vor dem Schneidelement angeordnet wird.

4. Verfahren nach einem der vorstehenden Ansprüche, wobei ein Trennelement (3) in der Nähe des Übergangs von den Chicoréewurzeln (A) zu den Chicoréeköpfen (B) angeordnet wird, wobei das Trennelement während des Erntens als Führung für das Schneidelement (4) verwendet wird, wobei das Schneidelement vorzugsweise in einem konstanten Abstand zum Trennelement unter dem Einfluß eines Federdrucks und eines Führungselements geführt wird.

5. Vorrichtung zum Ernten von Chicorées, deren Wurzeln (A) mit den daran gebildeten Köpfen (B) in Haltern (2) in einem Gewächstrog (1) aufgenommen sind, **gekennzeichnet durch** Positionierungseinrichtungen (6-15) zum Positionieren der Halter (2) in einem Winkel zur Horizontalen, ein Schneidelement (4), Einrichtungen (25-29) zum Bewegen der Positionierungseinrichtungen (7) und des Schneidelements (4) relativ zueinander und Aufnahmeeinrichtungen (5) zum Aufnehmen der abgeschnittenen Köpfe (B).

6. Vorrichtung nach Anspruch 5, wobei die Aufnahmeeinrichtungen (5) in der Form eines Förderers sind.

7. Vorrichtung nach Anspruch 6, wobei der Förderer (5) ein Endlosförderband aufweist.

8. Vorrichtung nach einem der Ansprüche 5 bis 7, wobei die Positionierungseinrichtungen (6-15) einen kippbaren, vorzugsweise randähnlichen Rahmen (7) aufweisen, der mit mindestens einem fahrbaren Greifer (8) versehen ist, der in Längsrichtung des Rahmens bewegbar ist, um die Halter (2) zu greifen und sie relativ zum Rahmen (7) zu bewegen.

9. Vorrichtung nach einem der Ansprüche 5 bis 8 zur Verwendung mit Haltern (2), mit einem Trennelement (3), das in der Nähe des Übergangs von den Chicoréewurzeln (A) zu den Chicoréeköpfen (B) angeordnet ist, wobei das Trennelement (3) während des Erntens als Führung für das Schneidelement (4) verwendet werden kann, wobei das Schneidelement (4), vorzugsweise ein Messer, federnd auf einem Gestell gelagert ist, das quer zum Rahmen (7) der Positionierungseinrichtungen (6-15) bewegbar ist, und wobei das Schneidelement (4) ein Führungselement (31) aufweist, um das Trennelement (3) der Halter (2) zum Zwecke der Führung des Schneidelements in einer konstanten Höhe bezüglich des Trennelements aufzunehmen.

10. Vorrichtung nach einem der Ansprüche 5 bis 9, mit mindestens zwei Sätzen Positionierungseinrichtungen (6-15) und zugehörigen Schneidelementen (4), die entlang eines Endlosförderers (5) zum Aufnehmen der abgeschnittenen Chicoréeköpfe (B) angeordnet sind.

## Revendications

1. Procédé de récolte des endives, dont les racines (A) ayant des pointes (B) formées dessus sont logées dans des supports (2) dans un plateau de forçage (1), dans lequel un élément coupant (4) et les supports sont guidés l'un par rapport à l'autre et les pointes, qui sont placées côte à côte, sont alors détachées des racines, **caractérisé en ce que** les supports (2) contenant au moins une rangée de racines d'endives (A) sont soulevés du plateau de forçage (1) et placés au niveau d'un angle à l' horizontal, après quoi l'élément coupant et le support (2) sont déplacés l'un par rapport à l'autre et les pointes d'endives (B) tombent et sont réceptionnées.

2. Procédé selon la revendication 1, dans lequel les pointes d'endives (B) sont réceptionnées sur un transporteur (5), qui décharge par la suite les pointes d'endives.

3. Procédé selon la revendication 1 ou 2, dans lequel toutes les pointes d'endives (B) sont soulevées du plateau de forçage (1) au même moment à l'aide de leurs supports (2) et l'élément coupant (4) est déplacé vers l'avant et vers l'arrière, tandis qu'une nouvelle rangée respective de pointes d'endives (B) est placée en face de l'élément coupant à l'aide des supports (2).

4. Procédé selon l'une quelconque des revendications précédentes, dans lequel un élément de calibrage (3) est disposé à proximité de la transition entre les racines d'endives (A) et les pointes d'endives (B), lequel élément de calibrage est utilisé comme un guide pour l'élément coupant (4) durant la récolte, dans lequel l'élément coupant est de préférence guidé à une distance constante de l'élément de calibrage sous l'influence de la pression du ressort et d'un élément de guidage.

5. Dispositif de récolte des endives, dont les racines (A) ayant des pointes (B) formées dessus sont logées dans des supports (2) dans un plateau de forçage (1), **caractérisé par** des moyens de positionnement (6 à 15) destinés à positionner les supports (2) au niveau d'un angle à l'horizontal, un élément coupant (4), des moyens (25 à 29) destinés à déplacer les moyens de positionnement (7) et l'élément coupant (4) l'un par rapport à l'autre, et des moyens de réception (5) destinés à réceptionner les pointes coupées (B).

6. Dispositif selon la revendication 5, dans lequel lesdits moyens de réception (5) sont sous la forme d'un transporteur.

7. Dispositif selon la revendication 6, dans lequel ledit transporteur (5) comprend une courroie de transporteur sans fin.

8. Dispositif selon l'une quelconque des revendications 5 à 7, dans lequel lesdits moyens de positionnement (6 à 15) comprennent un cadre basculant, ressemblant de préférence à une bordure (7) équipé d'au moins un appareil de préhension qui peut être conduit (8) mobile dans la direction longitudinale du cadre pour saisir et déplacer les supports (2) par rapport au cadre (7).

9. Dispositif selon l'une quelconque des revendications 5 à 8 à utiliser avec des supports (2) comprenant un élément de calibrage (3) disposé à proximité de la transition entre les racines d'endives (A) et les pointes d'endives (B), lequel élément de calibrage (3) peut être utilisé comme un guide pour l'élément coupant (4) durant la récolte, dans lequel l'élément coupant (4), de préférence un couteau, est monté sur ressort par un chariot qui est mobile de façon transversale par rapport au cadre (7) desdits moyens de positionnement (6 à 15), et dans lequel l'élément coupant (4) comprend un élément de guidage (31) pour mettre en prise l'élément de calibrage (3) des supports (2) dans le but de guider l'élément coupant à une hauteur constante par rapport à l'élément de calibrage.

10. Dispositif selon l'une quelconque des revendications 5 à 9, comprenant au moins deux ensembles de moyens de positionnement (6 à 15) et éléments coupants associés (4) disposés le long d'un transporteur circulaire (5) destiné à réceptionner les pointes d'endives coupées (B).
